# FASCICULE DE BREVET EUROPEEN

(11) **EP 0 738 578 B1**
(45) Date de publication et mention de la délivrance du brevet: **16.06.1999**
(21) Numéro de dépôt: 96400827.0
(22) Date de dépôt: 18.04.1996
(51) Int. Cl.: B29C 45/44, F21Q 1/00

(54) **Procédé et moule pour le moulage par injection d'une glace de dispositif d'éclairage ou de signalisation de véhicule automobile**
Verfahren und Form zum Spritzgiessen einer Scheibe einer Beleuchtungs- oder Signalisierungsvorrichtung eines Kraftfahrzeuges
Method and mould for injection moulding a glass of an illumination or signalling device of a vehicle

(30) Priorité: 21.04.1995 FR 9504799
(43) Date de publication de la demande: 23.10.1996
(73) Titulaire: VALEO VISION, 93000 Bobigny (FR)
(72) Inventeur: Rageade, Gilles, 77134 Les Ormes Sur Voulzie (FR)
(74) Mandataire: Martin, Jean-Jacques

(56) Documents cités:
- EP-A- 0 638 762
- PATENT ABSTRACTS OF JAPAN vol. 13, no. 202 (M-824), 12 Mai 1989 & JP-A-01 024709 (NIPPON PLAST CO LTD), 26 Janvier 1989,
- PATENT ABSTRACTS OF JAPAN vol. 15, no. 400 (M-1167), 11 Octobre 1991 & JP-A-03 165402 (ICHIKOH IND LTD), 17 Juillet 1991,

## Description

La présente invention se rapporte à un procédé de moulage par injection d'une glace de dispositif d'éclairage ou de signalisation de véhicule automobile.

Elle se rapporte également au moule de fabrication d'une telle glace et à la glace en elle-même.

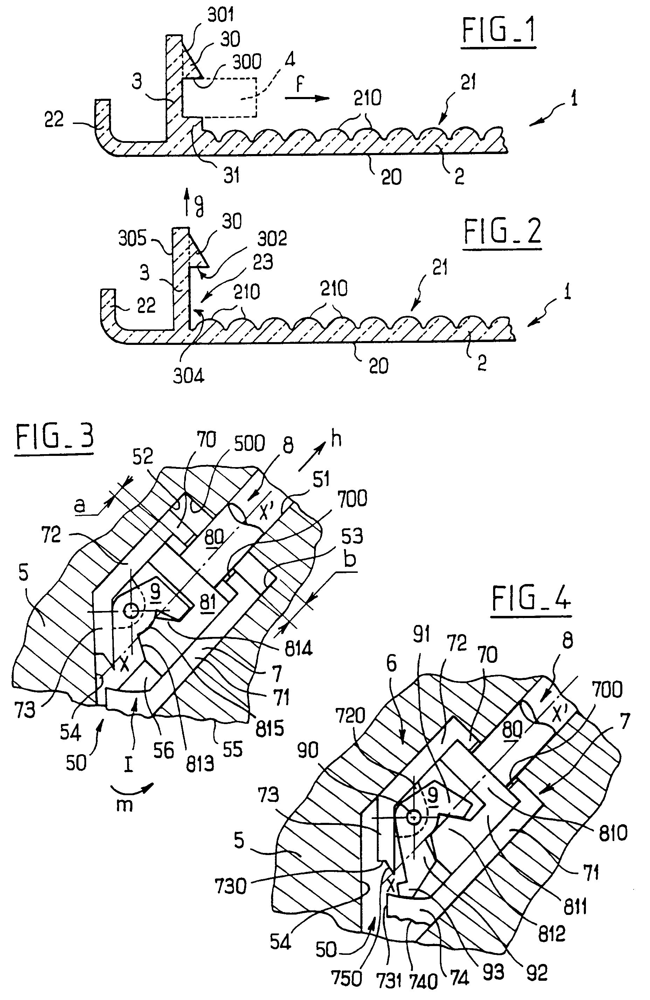

Le type général de glace dont il s'agit est illustré schématiquement et partiellement à la figure 1 annexée.

Cette glace, qui porte la référence numérique 1, est formée d'une plaque transparente 2 colorée ou non, dont les faces externe et interne sont numérotées respectivement 20 et 21. La face externe 20 est plane et parallèle au plan général de la glace. La face interne est pourvue d'aménagements optiques formés de creux et de reliefs. Ces aménagements sont destinés à diffuser la lumière provenant de la lampe du dispositif d'éclairage et à donner une certaine homogénéité à la surface éclairante.

Dans l'exemple représenté, les aménagements consistent à un ensemble de billes 210. Dans une autre forme de réalisation, il pourrait s'agir d'un ensemble de tores ou encore de stries disposées parallèlement les unes aux autres. La partie périphérique 22 de la glace est dépourvue d'aménagements optiques et est recourbée à 90° par rapport au plan de la glace, du côté de sa face interne.

La glace comporte au moins une patte 3 (une seule est visible à la figure 1) qui s'étend depuis une région de la face interne 21, selon une direction essentiellement perpendiculaire à cette région, c'est-a-dire, dans l'exemple représenté, au plan de la glace. Cette patte porte à son extrémité libre une dent d'encliquetage rentrante 30 pour le montage de la glace sur le boîtier d'un dispositif d'éclairage ou de signalisation. Sa face oblique est désignée 301, tandis que sa face d'accrochage est désignée 300.

Cette glace, de type connu, comporte une surépaisseur de matière 31 dont la présence est directement liée à la méthode de moulage de la glace. Cette surépaisseur forme partie intégrante de la plaque transparente 2 et s'étend à la base de la patte 3, à l'aplomb de la dent 30.

A l'observation de la figure 1, on comprend aisément que le démoulage de la zone en contre-dépouille 300 de la dent nécessite d'avoir recours à un moule équipé d'un tiroir 4. La direction de déplacement de ce tiroir, illustrée par la flèche **f**, est généralement parallèle au plan de la glace. La face interne 21 étant pourvue de creux et de reliefs, il est impossible, selon cette technique d'éviter cette surépaisseur.

Cependant, la présence de cette surépaisseur génère un défaut d'aspect. En effet, lorsque l'on regarde la glace dans la direction de la flèche **g**, c'est-à-dire depuis l'extérieur, on remarque une zone plus sombre que le reste de la glace (correspondant à ladite surépaisseur).

La présente invention a pour but de pallier cet inconvénient, c'est-à-dire de fournir un procédé de moulage qui permette d'obtenir une glace du type évoqué plus haut, exempte de ce défaut d'aspect.

Un autre but de l'invention est de fournir un moule pour la mise en oeuvre de ce procédé.

Enfin, un autre objectif de l'invention est de fournir une glace exemple de défauts d'aspect.

Conformément à l'invention, le procédé de fabrication par moulage par injection d'une glace de dispositif d'éclairage ou de signalisation de véhicule automobile, la glace comportant une face interne pourvue d'aménagements optiques en creux et reliefs et au moins une patte qui s'étend depuis une région de ladite face interne selon une direction sensiblement perpendiculaire au plan de ladite région, la patte comportant à distance de ladite face interne une dent saillante d'encliquetage surplombant ladite face interne, comprend les étapes qui consistent à :
a) mettre en place des parties de moule définissant la face externe de la glace, une partie de la face interne de la glace et une partie extérieure de la patte ;
b) mettre en place du côté intérieur de la glace un insert mobile, selon une direction généralement oblique par rapport à ladite région de la face interne et à ladite patte, l'insert mobile comportant une enveloppe extérieure définissant une partie complémentaire de la face interne de la glace et une partie de base en contre-dépouille, adjacente à ladite face interne, de la patte ;
c) déplacer une partie interne escamotable située à l'intérieur de ladite enveloppe extérieure, de manière l'amener à définir une partie intermédiaire en contre-dépouille de la patte située entre ladite partie de base et la dent saillante ;
d) procéder au moulage ;
e) déplacer ladite partie escamotable, ledit insert mobile et lesdites parties de moule selon les mouvements inverses, pour démouler la glace.

Selon d'autres aspects non limitatifs de ce procédé :
- à l'étape c), on déplace la partie interne escamotable selon un mouvement de rotation par rapport à l'enveloppe extérieure ;
- le mouvement de rotation de ladite partie interne est commandé par le mouvement de l'insert mobile ;
- le mouvement de l'insert mobile est mis en oeuvre par un organe de manoeuvre qui actionne à la fois ladite enveloppe extérieure et ladite partie interne ;
- l'insert mobile est mis en place selon une direction formant un angle d'environ 45° par rapport à ladite région de la face interne et à la patte ;
- à l'étape a), on déplace la partie interne escamotable selon un mouvement de translation généralement parallèle à ladite région de la face interne.

Le moule pour la mise en oeuvre du procédé, comprend au moins deux parties de moule aptes à définir par rapprochement selon une direction de démoulage une face externe de la glace, une partie de la face interne de la glace et une partie extérieure de la patte, un insert mobile comportant une enveloppe extérieure et apte à définir, par déplacement selon une direction oblique par rapport à la direction de démoulage, une partie complémentaire de la face interne de la glace et une partie de base en contre-dépouille, adjacente à ladite face interne, de la patte, et une partie interne escamotable située à l'intérieur de ladite enveloppe extérieure et apte à être déplacée par rapport à ladite enveloppe pour définir une partie intermédiaire en contre-dépouille de la patte situé entre ladite partie de base et la dent saillante.

Selon des formes de réalisation préférées mais non limitatives :
- la partie interne est articulée par rapport à ladite enveloppe extérieure ;
- l'insert comporte un organe de manoeuvre dont le déplacement selon ladite direction oblique est apte à permettre le coulissement de ladite enveloppe extérieure et la rotation de la partie interne ;
- l'organe de manoeuvre comprend une tige sur laquelle est emmanchée ladite enveloppe extérieure et dont une extrémité libre est pourvue d'une tête de manoeuvre desdites partie intérieure et enveloppe extérieure.

Enfin, la glace conforme à l'invention, qui comporte une face interne pourvue d'aménagements optiques en creux et reliefs et au moins une patte qui s'étend depuis une région de ladite face interne selon une direction sensiblement perpendiculaire au plan de ladite région, la patte comportant à distance de ladite face interne une dent saillante d'encliquetage surplombant ladite face interne, est remarquable par le fait que les aménagements optiques se prolongent sur ladite face interne jusque dans une zone située à l'aplomb de ladite dent saillante.

D'autres caractéristiques et avantages de l'invention apparaîtront à la lecture de la description détaillée d'un mode de réalisation préférentiel. Cette description est faite en référence aux dessins annexés dans lesquels :
- la figure 1 est une partielle en coupe verticale d'une glace conforme à l'état de la technique, le plan de coupe étant généralement perpendiculaire au plan de la glace ;
- la figure 2 est une vue partielle d'une glace conforme à l'invention, selon un plan de coupe identique à celui de la figure 1 ;
- la figure 3 est une vue en coupe verticale partielle d'une partie de moule dite extérieure de fabrication de la glace, le plan de coupe étant confondu avec celui d'une paroi d'une cavité présente dans la partie de moule, cette cavité renfermant des équipements spécifiques au moulage de la dent de la glace ;
- la figure 4 est une vue analogue à la figure 3, lesdits équipements étant dans une seconde position de travail ;
- les figures 5 à 8 sont des schémas destinés à illustrer les différentes étapes de moulage d'une glace.

La glace de dispositif d'éclairage ou de signalisation conforme à l'invention est partiellement représentée à la figure 2.

Comme dans la glace de l'art antérieur, celle-ci comprend un transparent 2 comportant une face interne 21 et une face externe 20. La face interne est pourvue d'aménagements optiques, ici en forme de billes 210. La partie périphérique 22 de la glace est dépourvue de ces aménagements et est recourbée à 90° par rapport au plan de la glace, du côté de sa face interne.

La glace comporte une patte 3 qui s'étend depuis la face 21, selon une direction généralement perpendiculaire au plan de la glace. Cette patte porte à son extrémité libre une dent d'encliquetage rentrante 30.

Conformément à l'invention, les aménagements optiques 210 se prolongent sur la face interne 21 jusque dans la zone 23 située à l'aplomb de la dent 30.

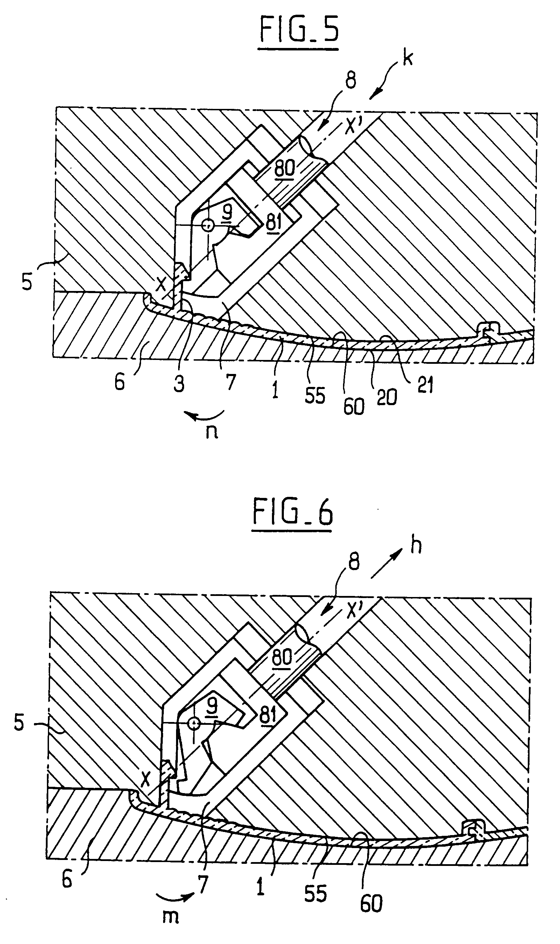

Aux figures 5 à 8 est représenté partiellement un moule de fabrication d'une telle glace. Ce moule comprend une partie de moule 5 dite intérieure et une partie de moule 6 dite extérieure qui sont respectivement destinées à délimiter d'une part la face interne 21 de la glace, ainsi qu'une partie extérieure 305 de la patte 3, et d'autre part la face externe 20 de la glace. Les empreintes respectives, définissant les faces interne et externe de la glace, ont été désignés 55 et 60.

Comme le montrent clairement les figures 3 et 4, la partie de moule 5 comporte un logement 50 qui débouche au niveau de l'empreinte 55. Ce logement est orienté selon un axe **XX'** disposé obliquement, formant un angle d'environ 45° avec le plan général de l'empreinte 55.

Ce logement est délimité par six faces. Deux faces latérales parallèles 52 et 53 s'étendent parallèlement à l'axe **XX'**. La face 53 s'étend depuis le fond du logement jusqu'à l'empreinte 55 tandis que la face 52 se raccorde, selon un angle obtus, à une face 54 qui s'étend jusqu'à l'empreinte, sensiblement perpendiculairement à cette dernière. La face 500 formant le fond s'étend perpendiculairement aux faces 52 et 53. Enfin, les deux autres faces latérales, dont une 56 est visible sur les dessins, s'étendent perpendiculairement aux faces 52, 53 et 500.

La face 500 débouche, dans l'axe **XX'**, sur une ouverture cylindrique 51 qui s'étend vers l'intérieur de la partie de moule.

A l'intérieur de ce logement est monté un insert mobile qui porte la référence I. Cet insert est formé d'une partie extérieure 7 ou "enveloppe", d'une partie intérieure mobile 9 ou "sabot" et d'un organe de manoeuvre 8.

L'enveloppe 7 est destinée à coulisser à l'intérieur du logement 50. Elle comprend une plaque de fond 70 mince et à parois parallèles occupant la même surface que le fond 500 du logement. Sur cette plaque se raccordent deux ailes 71 et 72, plaquées respectivement contre les faces 53 et 52 du logement. Il s'agit également de plaques minces à parois parallèles. Leur longueur, c'est-à-dire dans le sens axial, est inférieure à celle des faces 53 et 52 d'une valeur **b** constituant la course de l'insert dans son logement.

L'aile 72 se prolonge par une partie d'extrémité 73 qui s'étend parallèlement à la face 54 du logement. Elle occupe une hauteur sensiblement égale à la moitié de celle de la face 54 et son extrémité libre est conformée en deux parties 730 et 731 de profil complémentaire de celui de la partie supérieure et de la paroi inclinée de la dent à mouler.

L'aile 71 se prolonge également par une seconde portion 74 formant un angle obtus avec cette dernière. Sa face externe 740 (tournée vers l'ouverture de la cavité 50) est garnie de reliefs complémentaires de ceux à réaliser sur la face interne de la glace à mouler. La face opposée est légèrement courbe. Sa partie d'extrémité, en regard de la face 54 du logement 50 est référencée 750.

Enfin, dans la zone de jonction des ailes 72 et 73 s'étend, parallèlement à la face 56 de la cavité, un palier 720 traversé par un trou circulaire d'axe perpendiculaire au plan de la face 56.

La plaque 70 comporte une ouverture cylindrique 700 centrée sur l'axe **XX'**.

A l'intérieur de cette ouverture peut coulisser un arbre 80, lui-même engagé dans l'alésage 51.

L'arbre 80 forme, avec une tête de manoeuvre 81, l'organe de manoeuvre précité 8.

Cette tête de manoeuvre 81 est entièrement logée à l'intérieur de l'enveloppe 7 et comporte une plaque de fond formant butée 810 et fixée à l'arbre 80. Elle se raccorde perpendiculairement à une patte 811 prévue parallèle et contiguë à l'aile 71 de l'enveloppe.

A son extrémité libre et du côté opposé à l'enveloppe, la patte 811 porte une saillie 812 en forme de trapèze isocèle dont la face formant sommet 815 s'étend selon l'axe **XX'**. Les deux autres faces, disposées obliquement, sont répertoriées 813 et 814.

Enfin, l'insert I comporte un sabot mobile 9, monté mobile par rapport à l'enveloppe 7, autour de l'axe 90 qui traverse le palier 720. Pour ce faire, il comporte une rainure pour la réception du palier solidaire de l'enveloppe.

Ce sabot comporte une patte 91 qui s'étend dans l'intervalle situé entre la saillie 812 et la plaque 810.

Il comporte une seconde patte 92 qui s'étend dans l'espace situé entre la saillie 812 et l'aile 73 de l'enveloppe.

Cette patte est pourvue à son extrémité libre d'un appendice 93 destiné à former la partie en contre-dépouille de la dent de la glace à fabriquer.

La géométrie de l'organe de manoeuvre et du sabot est telle que l'organe de manoeuvre peut coulisser à l'intérieur de l'enveloppe d'une course **a**. Cependant, comme le montre la figure 3, la course **a** est inférieure à la course **b** de l'insert.

Les figures 3 et 4 montrent des positions dite "basse" et "haute" de l'insert.

En position basse, l'aile 74 de l'enveloppe obture partiellement le logement 50 et les reliefs formés sur sa face 740 sont disposés dans la continuité de ceux de l'empreinte 55.

De plus, l'appendice 93 est en appui contre l'aile 74 de sorte qu'il délimitent tous les deux, une face de la dent à mouler, tandis que la face 55 du logement délimite la face opposée.

Dans cette position, la patte 92 du sabot est enserrée entre l'aile 73 de l'enveloppe et la face 813 de la saillie 812.

Par un mouvement de traction dans le sens de la flèche **h** (figure 3) sur l'arbre 80, la tête 81 se déplace pour arriver en butée contre la paroi de fond 70 de l'enveloppe. Simultanément, par effet de coin, la saillie 812 de la tête 81 repousse la patte 91 du sabot. Celui-ci subit un mouvement de rotation autour de l'axe 90, symbolisé par la flèche **m**.

Il y a donc escamotage de l'appendice 93 qui glisse sur la face courbe de l'aile 74 de l'enveloppe.

Par suite du mouvement de traction, la tête de manoeuvre 81 vient en butée contre l'enveloppe et déplace celle-ci sur la courbe **b**.

Nous allons décrire ci-après les étapes d'un procédé de fabrication conforme à l'invention.

Dans une première étape de ce procédé, on commence par mettre en place l'une sur l'autre les deux parties de moule 5 et 6 de telle manière que leurs plans de joint soient en contact.

Dans une seconde étape, l'insert est déplacé dans le sens de la flèche **k** de telle sorte que l'enveloppe extérieure 7 définisse par ses zones 740 et 750 respectivement, une partie complémentaire de la face interne de la glace et une partie de base en contre-dépouille adjacente à cette face interne, de la patte 3.

Au cours de ce déplacement, l'enveloppe 7 coulisse à l'intérieur du logement 50 mais son déplacement est limité par sa partie d'aile 73 qui vient en butée contre la face 54 du logement. L'enveloppe occupe alors la position illustrée à la figure 5.

Au cours du déplacement de l'insert, la tête de manoeuvre 81 coulisse à l'intérieur de l'enveloppe 7 et actionne le sabot mobile 9 dans le sens de la flèche **n** de sorte que son appendice 93 occupe une position qu'il l'amène à définir une partie intermédiaire en contre-dépouille de la patte située entre la partie de base et la dent saillante dont il a été question plus haut.

On est alors dans la situation de la figure 5, situation dans laquelle il est alors possible de procéder au moulage de manière conventionnelle.

Une fois celui-ci réalisé on peut alors procéder au démoulage de la glace. Pour ce faire, on procède dans l'ordre inverse des opérations indiquées ci-dessus. Ainsi, dans un premier temps, on fait subir à l'insert **I** une traction dans le sens de la flèche **h**, de sorte que la tête de manoeuvre et le sabot associé subissent un mouvement relatif par rapport à l'enveloppe. Plus précisément, la tête de manoeuvre ainsi que la tige 80 subissent un retrait vers l'intérieur du demi-moule tandis que le sabot 9 pivote dans le sens de la flèche **m** pour s'écarter de la partie en contre-dépouille de la dent 3. Cette situation est illustrée à la figure 6.

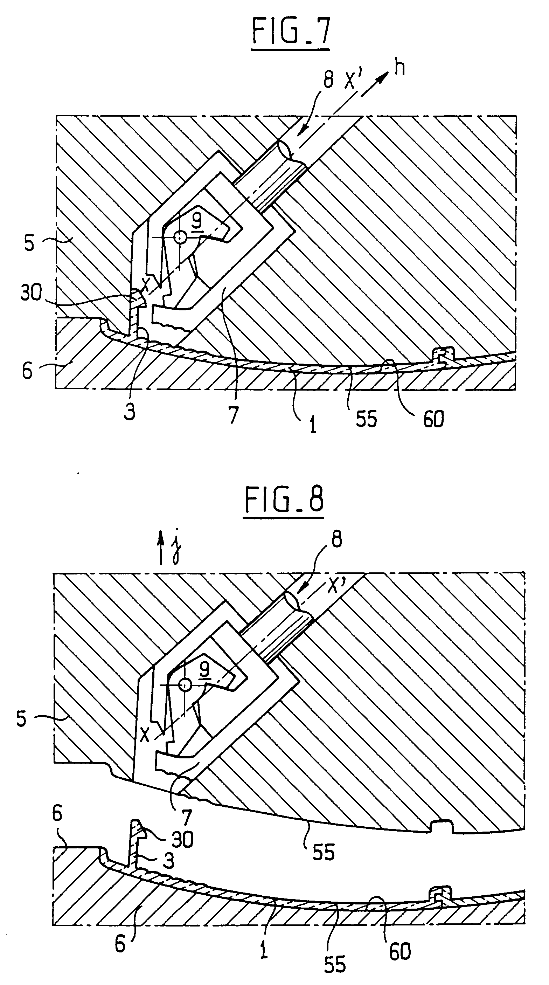

Toujours en opérant la traction dans le sens de la flèche **h**, la tête de manoeuvre 81 vient en butée contre l'enveloppe 7 et déplace celle-ci sur la course **b**. Durant cette opération, les parties actives de l'enveloppe 7 ont pu se dégager des surfaces correspondantes de la glace. C'est la situation de la figure 7.

Enfin, dans une dernière étape, on procède au retrait du demi-moule 5 dans le sens de la flèche **j**, c'est-à-dire selon une direction sensiblement parallèle à la patte 3 pour procéder au démoulage de la glace 1 proprement dit.

On notera que les matériaux utilisés pour la fabrication du moule sont des matériaux métalliques classiques tels que de l'aluminium.

La glace obtenue conformément au procédé décrit comporte donc des aménagements optiques jusqu'à l'aplomb de la dent d'encliquetage de sorte que, observée de l'extérieur, la glace présente un aspect de surface uniforme, exempt de zones sombres.

## Revendications

1. Procédé de fabrication par moulage par injection d'une glace (1) de dispositif d'éclairage ou de signalisation de véhicule automobile, la glace (1) comportant une face interne (21) pourvue d'aménagements optiques (210) en creux et reliefs et au moins une patte (3) qui s'étend depuis une région de ladite face interne (21) selon une direction sensiblement perpendiculaire au plan de ladite région, la patte (3) comportant à distance de ladite face interne (21) une dent saillante d'encliquetage (30) surplombant ladite face interne (21), le procédé comprenant les étapes qui consistent à :
a) mettre en place des parties (6, 5) de moule définissant la face externe (20) de la glace (1), une partie de la face interne (21) de la glace (1) et une partie extérieure (305) de la patte (3) ;
b) mettre en place du côté intérieur de la glace un insert mobile (I), selon une direction (XX') généralement oblique par rapport à ladite région de la face interne (21) et à ladite patte (3), l'insert mobile (I) comportant une enveloppe extérieure (7) définissant une partie complémentaire (740) de la face interne (21) de la glace et une partie de base (301) en contre-dépouille, adjacente à ladite face interne (21), de la patte (3) ;
c) déplacer une partie interne escamotable (9) située à l'intérieur de ladite enveloppe extérieure (7), de manière l'amener à définir une partie intermédiaire (302) en contre-dépouille de la patte (3) située entre ladite partie de base (304) et la dent saillante (30) ;
d) procéder au moulage ;
e) déplacer ladite partie escamotable (9), ledit insert (I) mobile et lesdites parties de moule (5, 6) selon les mouvements inverses, pour démouler la glace.

2. Procédé selon la revendication 1, caractérisé en ce que, à l'étape c), on déplace la partie interne escamotable (9) selon un mouvement de rotation par rapport à l'enveloppe extérieure (7).

3. Procédé selon la revendication 2, caractérisé en ce que le mouvement de rotation de ladite partie interne (9) est commandé par le mouvement de l'insert mobile (I).

4. Procédé selon la revendication 3, caractérisé en ce que le mouvement de l'insert mobile (I) est mis en oeuvre par un organe de manoeuvre (8) qui actionne à la fois ladite enveloppe extérieure (7) et ladite partie interne (9).

5. Procédé selon l'une des revendications 1 à 4, caractérisé en ce que ledit insert mobile (I) est mis en place selon une direction formant un angle d'environ 45° par rapport à ladite région de la face interne (21) et à la patte (3).

6. Procédé selon la revendication 1, caractérisé en ce qu'à l'étape a), on déplace la partie interne escamotable (9) selon un mouvement de translation généralement parallèle à ladite région de la face interne.

7. Moule pour la mise en oeuvre du procédé selon la revendication 1, comprenant au moins deux parties de moule (6, 5) apte à définir par rapprochement selon une direction de démoulage (j) une face externe (20) de la glace (1), une partie de la face interne (21) de la glace (1) et une partie extérieure (305) de la patte (3), un insert mobile (I) comportant une enveloppe extérieure (7) et apte à définir, par déplacement selon une direction (h) oblique par rapport à la direction de démoulage (j), une partie complémentaire de la face interne (21) de la glace (1) et une partie de base (304) en contre-dépouille, adjacente à ladite face interne (21), de la patte (3), et une partie interne (9) escamotable située à l'intérieur de ladite enveloppe extérieure (7) et apte à être déplacée par rapport à ladite enveloppe (7) pour définir une partie intermédiaire (302) en contre-dépouille de la patte (3) situé entre ladite partie de base (304) et la dent saillante (30).

8. Moule selon la revendication 7, caractérisé en ce que ladite partie interne (9) est articulée par rapport à ladite enveloppe extérieure (7).

9. Moule selon la revendication 8, caractérisé en ce que ledit insert (I) comporte un organe de manoeuvre (8) dont le déplacement selon ladite direction oblique (j) est apte à permettre le coulissement de ladite enveloppe extérieure (7) et la rotation de la partie interne (9).

10. Moule selon la revendication 9, caractérisé en ce que ledit organe de manoeuvre (8) comprend une tige (80) sur laquelle est emmanchée ladite enveloppe extérieure (7) et dont une extrémité libre est pourvue d'une tête de manoeuvre (81) desdites partie intérieure (9) et enveloppe extérieure (7).

11. Glace moulée de dispositif d'éclairage ou de signalisation de véhicule automobile, qui comporte une face interne (21) pourvue d'aménagements optiques (210) en creux et reliefs et au moins une patte (3) qui s'étend depuis une région de ladite face interne (21) selon une direction sensiblement perpendiculaire au plan de ladite région, la patte (3) comportant à distance de ladite face interne (21) une dent (30) saillante d'encliquetage surplombant ladite face interne (21), caractérisée en ce que lesdits aménagements optiques (210) se prolongent sur ladite face interne (21) jusque dans une zone (23) située à l'aplomb de ladite dent saillante (30).

## Claims

1. Method of manufacturing, by injection moulding, a cover (1) for a motor vehicle lighting or signalling device, the cover (1) having an internal face (21) provided with optical arrangements (210) in hollow and relief and at least one lug (3) which extends from a region of the said internal face (21) in a direction substantially perpendicular to the plane of the said region, the lug (3) having, at a distance from the said internal face (21), a projecting snapping-in tooth (30) overhanging the said internal face (21), the method comprising the steps which consist of:
a) fitting the mould parts (6, 5) defining the external face (20) of the cover (1), part of the internal face (21) of the cover (1) and an external part (305) of the lug (3);
b) fitting, on the inside of the cover, a movable insert (I), in a direction (XX') generally oblique with respect to the said region of the internal face (21) and with respect to the said lug (3), the movable insert (I) having an external envelope (7) defining a complementary part (740) of the internal face (21) of the cover and an undercut base part (301), adjacent to the said internal face (21), of the lugs (3);
c) moving a retractable internal part (9) situated inside the said external envelope (7), so as to cause it to define an intermediate undercut part (302) of the lug (3) situated between the said base part (304) and the projecting tooth (30);
d) carrying out the moulding;
e) moving the said retractable part (9); the said movable insert (I) and the said mould parts (5, 6) in reverse movements, in order to remove the cover from the mould.

2. Method according to Claim 1, characterised in that, at step c), the retractable internal part (9) is moved in a rotation movement with respect to the external envelope (7).

3. Method according to Claim 2, characterised in that the rotation movement of the said internal part (9) is controlled by the movement of the movable insert (I).

4. Method according to Claim 3, characterised in that the movement of the movable insert (I) is implemented by a manoeuvring member (8) which actuates both the said external envelope (7) and the said internal part (9).

5. Method according to one of Claims 1 to 4, characterised in that the said movable insert (I) is put in place in a direction forming an angle of approximately 45° with respect to the said region of the internal face (21) and with respect to the lug (3).

6. Method according to Claim 1, characterised in that, at step a), the retractable internal part (9) is moved in a translation movement roughly parallel to the said region of the internal face.

7. Mould for implementing the method according to Claim 1, comprising at least two mould parts (6, 5) able to define, by moving together in a stripping direction (j), an external face (20) of the cover (1), part of the internal face (21) of the cover (1) and an external part (305) of the lug (3), a movable insert (I) having an external envelope (7) and able to define, by movement in a direction (h) which is oblique with respect to the stripping direction (j), a complementary part of the internal face (21) of the cover (1) and an undercut base part (304), adjacent to the said internal face (21), of the lug (3), and a retractable internal part (9) situated inside the said external envelope (7) and able to be moved with respect to the said envelope (7) in order to define an intermediate undercut part (302) of the lug (3) situated between the said base part (304) and the projecting tooth (3).

8. Mould according to Claim 7, characterised in that the said internal part (9) is articulated with respect to the said external envelope (7).

9. Mould according to Claim 8, characterised in that in that the said insert (I) has a manoeuvring member (8) whose movement in the said oblique direction (j) is able to allow the sliding of the said external envelope (7) and the rotation of the internal part (9).

10. Mould according to Claim 9, characterised in that the said manoeuvring member (8) comprises a rod (80) on which the said external envelope (7) is fitted and a free end of which is provided with a head (81) for manoeuvring the said internal part (9) and external envelope (7).

11. Moulded cover for a motor vehicle lighting or signalling device, which has an internal face (21) provided with optical arrangements (210) in hollow and relief and at least one lug (3) which extends from a region of the said internal face (21) in a direction substantially perpendicular to the plane of the said region, the lug (3) having, at a distance from the said internal face (21), a projecting snapping-in tooth (30) overhanging the said internal face (21), characterised in that the said optical arrangements (210) are extended over the said internal face (21) as far as a zone (23) situated vertically in lien with the said projecting tooth (30).

## Patentansprüche

1. Verfahren zu der mittels Spritzgießen erfolgenden Herstellung einer Abdeckscheibe (1) einer Beleuchtungs- oder Signalisierungsvorrichtung eines Kraftfahrzeugs, wobei die Abdeckscheibe (1) eine Innenfläche (21) mit optischen Anordnungen (210) in Form von Vertiefungen und Erhebungen sowie wenigstens einen Ansatz (3) umfaßt, der sich von einem Bereich der besagten Innenfläche (21) aus entlang einer zur Ebene des besagten Bereichs in etwa senkrechten Richtung erstreckt, wobei der Ansatz (3) in einem Abstand von der besagten Innenfläche (21) einen vorstehenden Rastzahn (30) aufweist, der über die besagte Innenfläche (21) vorspringt, wobei das Verfahren Arbeitsschritte umfaßt, die darin bestehen:
a) Formteile (6, 5) einzusetzen, die die Außenfläche (20) der Abdeckscheibe (1), einen Teil der Innenfläche (21) der Abdeckscheibe (1) und einen Außenteil (305) des Ansatzes (3) definieren;
b) auf der Innenseite der Abdeckscheibe einen entlang einer im Verhältnis zu dem besagten Bereich der Innenfläche (21) und zu dem besagten Ansatz (3) allgemein schrägen Richtung (XX') beweglichen Einsatz (I) einzusetzen, wobei der bewegliche Einsatz (I) eine äußere Umhüllung (7) umfaßt, die einen zur Innenfläche (21) der Abdeckscheibe komplementären Teil (740) und einen der besagten Innenfläche (21) zugekehrten hinterschnittenen Fußteil (301) des Ansatzes (3) definiert;
c) einen im Innern der besagten äußeren Umhüllung (7) angeordneten versenkbaren Innenteil (9) zu verschieben, um ihn dazu zu bringen, einen hinterschnittenen Zwischenteil (302) des Ansatzes (3) zu definieren, der zwischen dem besagten Fußteil (304) und dem vorstehenden Zahn (30) angeordnet ist;
d) das Spritzgießen durchzuführen;
e) den besagten versenkbaren Teil (9), den besagten beweglichen Einsatz (I) und die besagten Formteile (5, 6) in entgegengesetzten Bewegungen zu verschieben, um die Abdeckscheibe zu entformen.

2. Verfahren nach Anspruch 1 , **dadurch gekennzeichnet,** daß beim Arbeitsschritt c) der versenkbare Innenteil (9) in einer Drehbewegung im Verhältnis zur äußeren Umhüllung (7) verschoben wird.

3. Verfahren nach Anspruch 2 , **dadurch gekennzeichnet,** daß die Drehbewegung des besagten Innenteils (9) durch die Bewegung des beweglichen Einsatzes (I) betätigt wird.

4. Verfahren nach Anspruch 3 , **dadurch gekennzeichnet,** daß die Bewegung des beweglichen Einsatzes (I) durch ein Betätigungsorgan (8) umgesetzt wird, das sowohl die besagte äußere Umhüllung (7) als auch den besagten Innenteil (9) betätigt.

5. Verfahren nach einem der Ansprüche 1 bis 4 , **dadurch gekennzeichnet,** daß der bewegliche Einsatz (I) entlang einer Richtung eingesetzt wird, die einen Winkel von etwa 45° im Verhältnis zur Innenfläche (21) und zum Ansatz (3) bildet.

6. Verfahren nach Anspruch 1 , **dadurch gekennzeichnet,** daß beim Arbeitsschritt a) der versenkbare Innenteil (9) entlang einer geradlinigen Verschiebebewegung verschoben wird, die allgemein parallel zu dem besagten Bereich der Innenfläche verläuft.

7. Form für die Anwendung des Verfahrens nach Anspruch 1, umfassend wenigstens zwei Formteile (6, 5), die durch Annäherung entlang einer Entformungsrichtung (j) eine Außenfläche (20) der Abdeckscheibe (1), einen Teil der Innenfläche (21) der Abdeckscheibe (1) und einen Außenteil (305) des Ansatzes (3) definieren können, einen beweglichen Einsatz (I), der eine äußere Umhüllung (7) umfaßt und durch Verschiebung entlang einer im Verhältnis zur Entformungsrichtung (j) schrägen Richtung (h) einen zur Innenfläche (21) der Abdeckscheibe (1) komplementären Teil und einen der Innenfläche (21) zugekehrten hinterschnittenen Fußteil (304) des Ansatzes (3) definieren kann, und einen versenkbaren Innenteil (9), der im Innern der besagten äußeren Umhüllung (7) angeordnet ist und im Verhältnis zu der besagten Umhüllung (7) verschoben werden kann, um einen hinterschnittenen Zwischenteil (302) des Ansatzes (3) zu definieren, der zwischen dem besagten Fußteil (304) und dem vorspringenden Zahn (30) angeordnet ist.

8. Form nach Anspruch 7, **dadurch gekennzeichnet,** daß der Innenteil (9) im Verhältnis zu der besagten äußeren Umhüllung (7) gelenkig gelagert ist.

9. Form nach Anspruch 8, **dadurch gekennzeichnet,** daß der besagte Einsatz (I) ein Betätigungsorgan (8) umfaßt, dessen Verschiebung entlang der besagten Schrägrichtung (j) die Gleitverschiebung der besagten äußeren Umhüllung (7) und die Drehung des Innenteils (9) bewirken kann.

10. Form nach Anspruch 9, **dadurch gekennzeichnet,** daß das besagte Betätigungsorgan (8) einen Stift (80) umfaßt auf dem die besagte äußere Umhüllung (7) aufgesteckt ist und von dem ein freies Ende mit einem Betätigungskopf (81) für die Betätigung des besagten Innenteils (9) und der besagten äußeren Umhüllung (7) versehen ist.

11. Spritzgegossene Abdeckscheibe einer Beleuchtungs- oder Signalisierungsvorrichtung eines Kraftfahrzeugs, die eine Innenfläche (21) mit optischen Anordnungen (210) in Form von Vertiefungen und Erhebungen sowie wenigstens einen Ansatz (3) umfaßt, der sich von einem Bereich der besagten Innenfläche (21) aus entlang einer zur Ebene des besagten Bereichs in etwa senkrechten Richtung erstreckt, wobei der Ansatz (3) in einem Abstand von der besagten Innenfläche (21) einen vorstehenden Rastzahn (30) umfaßt, der über die besagte Innenfläche (21) vorsteht, **dadurch gekennzeichnet**, daß die besagten optischen Anordnungen (210) auf der besagten Innenfläche (21) bis in eine Zone (23) verlängert werden, die lotrecht zu dem besagten vorstehenden Zahn (30) angeordnet ist.
